# FASCICULE DE BREVET EUROPEEN

(11) **EP 3 170 216 B1**
(45) Date de publication et mention de la délivrance du brevet: **07.02.2018**
(21) Numéro de dépôt: 15748294.4
(22) Date de dépôt: 16.07.2015
(51) Int. Cl.: H01M 2/16, H01M 4/58, H01M 4/62, H01M 10/052, H01M 10/0569, H01M 4/38

(54) **BATTERIE LITHIUM-SOUFRE**
LITHIUM-SCHWEFEL-BATTERIE
LITHIUM-SULFUR BATTERY

(30) Priorité: 17.07.2014 FR 1456873
(43) Date de publication de la demande: 24.05.2017
(73) Titulaire: Blue Solutions, 29500 Ergué Gabéric (FR); Centre National de la Recherche Scientifique, 75016 Paris (FR); Universite de Nantes, 44000 Nantes (FR)
(72) Inventeur: LECUYER, Margaud, F-29760 Penmarc'H (FR); DESCHAMPS, Marc, F-29000 Quimper (FR); GAUBICHER, Joël, F-44000 Nantes (FR); LESTRIEZ, Bernard, F-44000 Nantes (FR); GUYOMARD, Dominique, F-44880 Sautron (FR); POIZOT, Philippe, F-44119 Grandchamp-des-Fontaines (FR)
(74) Mandataire: Peguet, Wilfried
(86) Numéro de dépôt international: PCT/FR2015/051942
(87) Numéro de publication internationale: WO 2016/009147

(56) Documents cités:
- WO-A1-99/19931
- WO-A1-2013/004945
- WO-A1-2013/155038
- US-A1- 2004 009 399
- D.R. CHANG ET AL: "Binary electrolyte based on tetra(ethylene glycol) dimethyl ether and 1,3-dioxolane for lithium-sulfur battery", JOURNAL OF POWER SOURCES, vol. 112, no. 2, 14 novembre 2002 (2002-11-14), pages 452-460, XP004391006, ISSN: 0378-7753, DOI: 10.1016/S0378-7753(02)00418-4
- W. ZHU ET AL: "A NOVEL POLYPROPYLENE MICROPOROUS FILM", POLYMERS FOR ADVANCED TECHNOLOGIES, vol. 7, no. 9, 1 septembre 1996 (1996-09-01), pages 743-748, XP000625570, ISSN: 1042-7147, DOI: 10.1002/(SICI)1099-1581(199609)7:9<743::AI D-PAT548>3.0.CO;2-W

## Description

La présente invention se rapporte au domaine des batteries lithium soufre de hautes densités d'énergie et de puissance. En particulier, la présente invention concerne une batterie lithium soufre comprenant un séparateur poreux en polypropylène orienté biaxialement et son procédé de fabrication.

Les batteries au lithium sont devenues des constituants indispensables dans de nombreux dispositifs qui comprennent des appareils portables, tels que notamment les téléphones mobiles, les ordinateurs et l'outillage léger, ou des appareils plus lourds tels que des moyens de transports à deux roues (bicyclettes, cyclomoteurs) ou à quatre roues (véhicules automobiles électriques ou hybrides). Elles sont également largement étudiées pour une utilisation dans le domaine du stockage stationnaire d'énergie.

Une batterie au lithium métal comprend au moins une électrode négative et au moins une électrode positive entre lesquelles est placé un électrolyte solide ou un séparateur imprégné par un électrolyte liquide. L'électrode négative est constituée d'une feuille de lithium métallique ou d'alliage de lithium, éventuellement supportée par un collecteur de courant ; et l'électrode positive est constituée par un collecteur de courant supportant un matériau d'électrode contenant au moins une matière active d'électrode positive capable d'insérer des ions lithium de manière réversible, éventuellement un polymère qui joue le rôle de liant (e.g. poly(fluorure de vinylidène) ou PVdF) et/ou éventuellement un agent conférant une conductivité électronique (e.g. carbone). L'électrolyte liquide est par exemple constitué d'un sel de lithium en solution dans un solvant choisi pour optimiser le transport et la dissociation des ions. Le séparateur doit, quant à lui, assurer une parfaite isolation entre les deux électrodes pour éviter tout risque de court-circuit. Il est donc en matériau poreux non conducteur électronique, généralement en matériau polymère (e.g. polyéthylène) ou en fibres (e.g. fibres de verre ou fibres de bois), et doit avoir :
- une résistance mécanique appropriée, pour supporter les contraintes dues aux variations de volume des matières actives pendant les cycles de charge et de décharge,
- une résistance chimique suffisante pour assurer sa tenue dans le temps puisqu'il est immergé dans une solution très corrosive (i.e. électrolyte), et
- une structure poreuse appropriée, pour permettre la diffusion des anions et cations de l'électrolyte, et éviter tout transport de matière active d'une électrode sur l'autre.

Au cours du fonctionnement de la batterie, des ions lithium passent de l'une à l'autre des électrodes à travers l'électrolyte. Lors de la décharge de la batterie, une quantité de lithium réagit avec la matière active d'électrode positive à partir de l'électrolyte, et une quantité équivalente est introduite dans l'électrolyte à partir de la matière active de l'électrode négative, la concentration en lithium restant ainsi constante dans l'électrolyte. L'insertion du lithium dans l'électrode positive est compensée par apport d'électrons à partir de l'électrode négative *via* un circuit extérieur. Lors de la charge, les phénomènes inverses ont lieu.

Les divers constituants d'une batterie au lithium sont choisis de manière à produire, au coût le plus faible possible, des batteries qui ont une densité d'énergie élevée, une bonne stabilité au cyclage et qui fonctionnent avec sécurité.

Un des systèmes de stockage électrochimique de l'énergie les plus prometteurs est la batterie lithium soufre, d'une part parce que le soufre élémentaire S₈ est un élément abondant, économique et non toxique, et d'autre part parce que ce matériau présente une capacité spécifique et une densité massique d'énergie théoriques élevées, et respectivement de 1675 mAh/g_{soufre} et de 2600 Wh/kg_{soufre}, si le soufre élémentaire S₈ est complètement réduit en sulfure de lithium Li₂S à une tension proche de 2 volts (par rapport au couple Li⁺/Li⁰). Par comparaison, les densités massiques d'énergie obtenues actuellement pour les meilleures batteries Li-ion sont de 200-250 Wh/kg, de 100-150 Wh/kg pour une batterie Na-ion, et de 50 Wh/kg pour une batterie à flux rédox (bien connue sous l'anglicisme *"redox-flow battery*"). Il est donc possible d'espérer atteindre des densités d'énergie de l'ordre de 500 Wh/kg pour une batterie lithium soufre (i.e. Li/S), ce qui est comparable aux valeurs obtenues pour des batteries Li-air.

Une batterie lithium soufre comprend généralement une électrode négative (i.e. anode) métallique composée de lithium ou d'un alliage à base de lithium, une électrode positive (i.e. cathode) comprenant du soufre ou un composé organique comprenant du soufre en tant que matière active, et un séparateur composé généralement d'une membrane poreuse de polyoléfines (e.g. polyéthylène, polypropylène) imprégnée par un électrolyte liquide comprenant au moins un sel de lithium, ou un électrolyte polymère assurant par lui-même à la fois la séparation physique des électrodes et le transport des ions lithium.

Cependant, dans une batterie lithium soufre, plusieurs problèmes sont généralement rencontrés. Tout d'abord, au pôle négatif, l'électrode de lithium métal est sujette à l'apparition de dendrites à sa surface au cours de la recharge. En effet, le lithium ayant tendance à croître sous forme colonnaire, il se dépose de façon non uniforme à la surface de l'électrode en lithium métal et forme ainsi des dendrites. Au cours du cyclage, les dendrites croissent et peuvent venir perforer le séparateur placé entre les deux électrodes et provoquer un court-circuit. À l'issue d'un court-circuit local provoqué par une dendrite, celle-ci fait généralement office de fusible et s'autodétruit, ce qui entraîne peu de conséquences quant aux performances de la batterie. En revanche, la répétition de ces micros court-circuits contribue à une autodécharge de la batterie. Dans des cas extrêmes, le courant circulant à travers ces court-circuits pouvant être très important, cela induit un échauffement local et, si des conditions défavorables sont réunies, un possible emballement thermique de la batterie (e.g. diminution de la stabilité thermique de la batterie en raison du vieillissement, batterie portée à une température élevée liée à l'application). Ces dernières années, la recherche s'est préférentiellement orientée vers la mise au point d'électrolytes solides (e.g. électrolytes polymères gélifiés) destinée à remplacer les électrolytes liquides. En effet, l'utilisation d'électrolytes liquides entraîne quasi systématiquement l'apparition de court-circuits en cyclage ou lorsque les densités de courant appliquées sont élevées. De plus, les séparateurs conventionnels utilisés en présence d'un électrolyte liquide ne sont pas stables vis-à-vis du lithium métal et ont tendance à réagir avec ce dernier pour former une mousse, entraînant ainsi sa dégradation. Par ailleurs, au pôle positif, la réduction du soufre par le lithium conduit à la formation de polysulfures liquides chargés négativement et solubles dans la plupart des électrolytes liquides usuels, qui diffusent à travers le séparateur jusqu'à l'électrode négative où ils sont réduits. Cette réduction des polysulfures au pôle négatif conduit à la formation d'une couche de Li₂S ou de Li₂S₂ sur le lithium métallique. Cette couche étant solide et isolante électrique, elle entraîne la passivation de l'électrode négative et le blocage des réactions électrochimiques. Les polysulfures intermédiaires de lithium Li₂Sₙ (2 < n < 8) pouvant réagir avec l'électrode négative, ils favorisent également l'autodécharge. En outre, ils sont responsables de la mise en place d'un mécanisme navette qui se produit en charge et qui entraîne la dégradation des performances de la batterie, notamment en termes d'efficacité coulombique.

Ainsi, Barchasz *et al.* ont décrit, dans la demande internationale WO2013/004945, un accumulateur lithium soufre comprenant :
- au moins une électrode négative comprenant une feuille de lithium et un collecteur de courant en cuivre ;
- au moins une électrode positive comprenant une encre formée à partir de 75% en masse de soufre élémentaire S₈ comme matière active, de 10% en masse de noir de carbone et de 5% en masse de fibres de carbone comme agents générant une conductivité électronique, et de 10% en masse de liant poly(fluorure de vinylidène) (PVdF), et un collecteur de courant en aluminium ;
- un séparateur d'électrodes comprenant au moins un non-tissé de fibres (e.g. fibres de verre, de polyéthylène téréphtalate (PET), de polyoléfines, de poly(vinyl alcool) (PVA), de polyamide (PA), etc...) et présentant une porosité d'au moins 50% et une épaisseur comprise entre 50 et 200 µm ; et
- un électrolyte en excès comprenant au moins un sel de lithium et imbibant ledit séparateur. De manière similaire, les documents WO 2013/155038 A1, US 2004/009399 A1 et WO 99/19931 A1, ainsi que l'article publié dans Journal of Power Sources, vol. 112, no. 2, 14 novembre 2002, pages 452-460, divulguent tous des batteries lithium-soufre incluant une électrode négative à base de lithium métallique, une électrode positive à base de soufre élémentaire (S₈) ou d'un composé organique soufré, un électrolyte comprenant un solvant de type polyéther tel qu'un glyme, et un séparateur à base de polypropylène.

Selon Barchasz *et al.,* l'utilisation d'un séparateur comprenant au moins un non-tissé de fibres et un excès d'électrolyte permet d'éviter la précipitation des espèces soufrées, ainsi que la passivation des électrodes, tout en obtenant une densité d'énergie massique importante de l'ordre de 200 Wh.kg⁻¹. Toutefois, l'accumulateur lithium soufre obtenu n'est pas optimisé pour éviter la formation de dendrites et la diffusion de la matière active au travers de l'électrolyte (*via* le séparateur) afin d'obtenir une capacité de décharge stable sur plusieurs cycles. Par ailleurs, l'épaisseur des séparateurs testés (i.e. supérieure à 50 µm) ne permet pas de garantir une densité volumique d'énergie suffisante.

En parallèle, la demande de brevet EP 0492942 A2 décrit la fabrication d'un film poreux orienté biaxialement à base de polypropylène et de polyéthylène et son utilisation dans un grand nombre d'applications telles que les filtres, les séparateurs de cellules électrochimiques, les membranes d'osmose inverse, les membranes d'étanchéité, les revêtements pour des équipements automobiles, les draps chirurgicaux et les vêtements de protection pour une utilisation dans les hôpitaux et dans les salles blanches électroniques, etc.... Toutefois, ledit film poreux orienté biaxialement en matériau polymère n'est pas optimisé pour être utilisé spécifiquement dans une batterie lithium soufre. En effet, les séparateurs sont fonction des performances recherchées pour une application donnée. Ainsi, le film poreux tel que décrit ne permet pas de garantir une stabilité électrochimique et une tenue mécanique suffisantes (e.g. taille des pores supérieure à 5 µm), une capacité de décharge stable sur plusieurs cycles, tout en évitant la mort prématurée de la batterie liée à la formation de dendrites. En effet, la taille des pores pouvant atteindre des valeurs de l'ordre de 20 µm environ, un tel séparateur laisse présager une inaptitude totale à s'opposer à la formation de dendrites, à moins qu'il ne présente une épaisseur très importante, conduisant alors à un abaissement important de la densité d'énergie volumique de la batterie envisagée. Par ailleurs, l'article publié dans Polymers for Advanced Technologies, vol. 7, no. 9, 1er septembre 1996, pages 743-748, décrit un film microporeux de polypropylène étiré biaxialement et son utilisation comme séparateur de batterie.

Le but de la présente invention est de pallier les inconvénients de l'art antérieur précité et de mettre au point une batterie lithium soufre économique, aux performances électrochimiques améliorées, notamment en termes de stabilité au cyclage et de densité volumique d'énergie.

Ce but est atteint par l'invention qui va être décrite ci-après.

L'invention a donc pour premier objet une batterie lithium soufre comprenant :
- une électrode négative comprenant du lithium métal ou un alliage de lithium métal,
- une électrode positive comprenant au moins un agent soufré choisi parmi le soufre élémentaire S₈ et un composé organique soufré comprenant au moins une liaison S-S, au moins un liant polymère P₁ et au moins un agent générant une conductivité électronique,
- un électrolyte comprenant au moins un polyéther linéaire ou cyclique liquide de faible masse molaire et au moins un sel de lithium L₁, et
- un séparateur poreux,
ladite batterie lithium soufre étant caractérisée en ce que le séparateur poreux est un séparateur orienté biaxialement comprenant au moins du polypropylène et ladite électrode positive comprend au moins 40% en masse environ de soufre (S) par rapport à la masse totale de ladite électrode positive.

La batterie de l'invention présente des performances électrochimiques remarquables en termes de densité volumique d'énergie et de stabilité de la capacité spécifique pendant la décharge sur un grand nombre de cycles, ce qui permet de penser que la diffusion des polysulfures est limitée.

Dans la présente invention, « un polyéther linéaire ou cyclique liquide de faible masse molaire » signifie un polyéther linéaire ou cyclique liquide de masse molaire inférieure ou égale à 20 000 g·mol⁻¹ environ, de préférence inférieure ou égale à 2000 g·mol⁻¹ environ, et de préférence encore inférieure ou égale à 600 g·mol⁻¹ environ.

Dans la présente invention, « un polyéther linéaire ou cyclique liquide de faible masse molaire » est également appelé « polyéther ».

Le séparateur orienté biaxialement utilisé dans la batterie lithium soufre de l'invention permet non seulement d'assurer la séparation électrique des électrodes, mais également d'éviter la formation de dendrites tout en garantissant de bonnes performances électrochimiques notamment en termes de stabilité en cyclage. En outre, le séparateur est stable vis-à-vis de l'électrolyte de la batterie, que ledit électrolyte soit sous forme liquide ou solide (e.g. électrolyte polymère gélifié). Enfin, grâce à la combinaison d'un séparateur orienté biaxialement et d'un électrolyte comprenant au moins un polyéther, le transport des ions lithium est optimisé tout en évitant la diffusion des polysulfures de l'électrode positive vers l'électrode négative.

Dans un mode de réalisation particulier de l'invention, le séparateur présente une épaisseur allant de 5 µm à 50 µm environ, de préférence de 10 µm à 40 µm environ, et de préférence encore de 10 µm à 30 µm environ.

En effet, le séparateur ne doit pas être trop fin, afin de présenter une bonne tenue mécanique et électrochimique pendant le cyclage, d'éviter les court-circuits, et d'accueillir une quantité d'électrolyte suffisante. Cependant, il ne doit pas être trop épais, sous peine de pénaliser la batterie en termes de densités d'énergie massique et volumique (effet de masse), et en termes de performances à haut régime ou à basse température (effet de polarisation).

Selon une forme de réalisation préférée de l'invention, le séparateur présente une porosité supérieure ou égale à 50% en volume environ, de préférence supérieure ou égale à 55% en volume environ, et de préférence encore supérieure ou égale à 60% en volume environ.

Dans un mode de réalisation particulier, le séparateur présente des pores de taille moyenne allant de 50 nm à 3 µm environ, de préférence de 50 nm à 1 µm environ, et de préférence encore de 100 nm à 500 nm environ.

Grâce à cette porosité, ledit séparateur peut être imprégné facilement par l'électrolyte tout en garantissant une tenue mécanique suffisante.

En effet, le séparateur de l'invention présente une résistance à la perforation (bien connue sous l'anglicisme « *puncture strength* ») d'au moins 30 Newton environ, et de préférence d'au moins 40 Newton environ.

En outre, le séparateur de l'invention présente un allongement à la rupture d'au moins 5 mm environ, et de préférence d'au moins 10 mm environ. Cet allongement est mesuré lors de tests de perforation à l'aide d'un poinçon métallique, à température ambiante.

Le séparateur peut présenter une porosité de type Gurley allant de 50 à 500 s/100 cm³ environ, et de préférence allant de 50 à 400 s/100 cm³ environ. La porosité de type Gurley P_{Gurley} indique le temps mis (en seconde) pour que 100 cm³ d'air traversent 1 pouce-carré de séparateur. La porosité de type Gurley P_{Gurley} traduit la perméabilité d'un séparateur : plus la valeur P_{Gurley} est faible, plus les échanges à travers celui-ci sont favorisés et ainsi, plus la diffusion des espèces est facilitée.

Le séparateur peut présenter un retrait thermique dans le sens longitudinal (i.e. retrait longitudinal) et/ou un retrait thermique dans le sens transversal (i.e. retrait transversal) strictement inférieur à 15% environ, et de préférence strictement inférieur à 10% environ, quelle que soit son épaisseur (le retrait est mesuré à 100°C pendant 1 heure).

En effet, le séparateur poreux orienté biaxialement doit avoir un retrait thermique suffisamment bas pour pouvoir supporter des montées en température dans la batterie lithium soufre et ainsi, éviter que la batterie soit dégradée par un échauffement non maîtrisé. Sa mise en oeuvre dans le procédé de fabrication des cellules est par ailleurs facilitée.

Dans la présente invention, l'expression « orienté biaxialement » signifie que le séparateur a été obtenu par étirage dans une direction longitudinale (« *machine direction* ») et dans une direction transversale à la direction longitudinale.

Le séparateur peut comprendre en outre un matériau polymère choisi parmi le polyéthylène, un copolymère du polyéthylène et un de leurs mélanges.

Le polypropylène peut être un homopolymère du polypropylène (PP) ou un copolymère du polypropylène.

Lorsque le séparateur comprend d'autres matériaux polymères que du polypropylène, il comprend au moins 90% en masse de polypropylène, et de préférence au moins 95% en masse de polypropylène, par rapport à la masse totale du séparateur.

Le séparateur de l'invention peut être uniquement constitué de polypropylène.

Le séparateur ne contient de préférence aucune charge inorganique et/ou aucune céramique.

Le séparateur ne comprend pas, de préférence, de matériau(x) polymère(s) qui peu(ven)t réagir avec les polysulfures, tels que le PVdF ou les polymères comprenant au moins une double liaison C=C tels que les caoutchoucs synthétiques naturels.

Le séparateur peut être monocouche ou multicouche. Lorsqu'il est multicouche, il est de préférence bicouche de façon à présenter une épaisseur la plus faible possible sans toutefois nuire à ses propriétés mécaniques.

Le séparateur doit posséder de bonnes propriétés de mouillabilité à l'égard de l'électrolyte utilisé de façon à ce que son imprégnation soit facile, notamment par simple mise en contact lorsque l'électrolyte est liquide, ou par co-laminage lorsque l'électrolyte est solide ou gélifié.

Le polyéther de l'électrolyte de la batterie de l'invention peut être choisi parmi :
* les polyéthylènes glycols de formule H-[O-CH₂-CH₂]ₘ-OH dans laquelle m est compris entre 1 et 13,
* les éthers de glycol de formule R-[O-CH₂-CH₂]ₚ-O-R' dans laquelle p est compris entre 1 et 13 et R et R', identiques ou différents, sont des groupes alkyles linéaires, ramifiés ou cycliques, pouvant comprendre de 1 à 20 atomes de carbone,

* les éthers de formule R¹-[CH₂-O]_{q}-R^{1'} dans laquelle q est compris entre 1 et 13, R¹ et R^{1'}, identiques ou différents, sont des alkyles linéaires, ramifiés ou cycliques, pouvant comprendre de 1 à 20 atomes de carbone et éventuellement des hétéroatomes,
* les éthers cycliques pouvant comprendre de 2 à 20 atomes de carbone, les polyéthers cycliques pouvant comprendre de 3 à 40 atomes de carbone, et
* un de leurs mélanges.

Le(s) polyéther(s) utilisé(s) dans l'électrolyte de l'invention est (sont) particulièrement stable(s) vis-à-vis du lithium et des composés soufrés, permettant ainsi de limiter au maximum les réactions parasites.

Le polyéther de l'invention est de préférence linéaire.

Dans un mode de réalisation encore plus préféré, le polyéther est le tétra éthylène glycol diméthyléther (TEGDME) de formule CH₃O-(CH₂-CH₂)₄-OCH₃ (i.e. R, R' = CH₃ et p = 4).

Le sel de lithium L₁ peut être choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄), le nitrate de lithium (LiNO₃), le lithium bis(fluorosulfonyl)imide (LiFSI) et leurs mélanges.

LiTFSI est le sel de lithium L₁ préféré.

Il va de soi que l'électrolyte de la batterie de l'invention est non-aqueux, c'est-à-dire qu'il ne comprend donc pas d'eau ou de solvants aqueux. En effet, un électrolyte aqueux n'est pas compatible avec une électrode négative en lithium métal.

L'électrolyte ne comprend pas, de préférence, de solvants organiques de type carbonate, ces derniers pouvant réagir avec les polysulfures formés pendant le cyclage.

Selon une première variante, l'électrolyte est un électrolyte liquide. Il imbibe alors complètement le séparateur afin d'en imprégner la porosité.

Selon cette première variante, la concentration du sel de lithium L₁ dans l'électrolyte liquide va de 0,8 à 8 mol/l environ, et de préférence de 1 à 5 mol/l environ.

L'électrolyte liquide peut être uniquement constitué d'un sel de lithium L₁ et d'un polyéther.

L'électrolyte liquide est, de préférence, une solution comprenant 1,5 mol/l de LiTFSI dans du TEGDME.

Selon une deuxième variante, l'électrolyte est un électrolyte polymère gélifié, il est alors déposé sur le séparateur afin d'en imprégner la porosité et de former un film d'électrolyte sec autoporté.

Selon cette deuxième variante, l'électrolyte comprend en outre au moins un liant polymère P₂.

Le liant polymère P₂ peut être choisi parmi les polyoléfines telles que les homopolymères ou les copolymères d'éthylène et de propylène, ou un mélange d'au moins deux de ces polymères ; les homopolymères et les copolymères d'oxyde d'éthylène (e.g. POE, copolymère du POE), d'oxyde de méthylène, d'oxyde de propylène, d'épichlorhydrine ou d'allylglycidyléther, ou leurs mélanges ; les polymères halogénés tels que les homopolymères et les copolymères de chlorure de vinyle, de fluorure de vinylidène (PVdF), de chlorure de vinylidène, de tétrafluorure d'éthylène, ou de chlorotrifluoroéthylène, les copolymères de fluorure de vinylidène et de hexafluoropropylène (PVdF-co-HFP) ou leurs mélanges ; les polymères non conducteurs électroniques de type anionique tels que le poly(styrène sulfonate), le poly(acide acrylique), le poly(glutamate), l'alginate, la pectine, ou leurs mélanges ; les polyacrylates ; et un de leurs mélanges.

L'électrolyte polymère gélifié peut comprendre de 20 à 70% en masse environ de liant polymère P₂, et de préférence de 40 à 60% en masse environ de liant polymère P₂, par rapport à la masse totale de l'électrolyte polymère gélifié.

Les liants polymères P₂ préférés sont le copolymère d'oxyde d'éthylène et d'oxyde de propylène et le copolymère d'oxyde d'éthylène et d'oxyde de butylène.

L'électrolyte polymère gélifié peut comprendre de 15 à 45% en masse environ de sel de lithium L₁, et de préférence de 20 à 35% en masse environ de sel de lithium L₁ par rapport à la masse totale de l'électrolyte polymère gélifié.

L'électrolyte polymère gélifié peut comprendre de 5 à 40% en masse environ de polyéther, et de préférence de 10 à 30% en masse environ de polyéther, par rapport à la masse totale de l'électrolyte polymère gélifié.

La batterie conforme à l'invention peut fonctionner entre 0 et 110°C environ, et de préférence entre 20 et 100°C environ.

Dans un mode de réalisation particulier de l'invention, l'électrode positive de la batterie de l'invention comprend au moins 45% en masse environ de soufre (S), et de préférence au moins 50% en masse environ de soufre (S) par rapport à la masse totale de ladite électrode positive.

Le composé organique soufré peut être choisi parmi les polysulfures organiques, notamment ceux de formule générale R²-S-Sₙ-R³ dans laquelle R² et R³, identiques ou différents, représentent une chaîne alkyle linéaire, ramifiée ou cyclique, pouvant comprendre de 1 à 20 atomes de carbone, et n étant compris entre 1 et 50 ; et les polymères disulfures présentant un enchaînement de liaisons S-S pouvant être cassées lors du cycle de décharge d'une batterie lithium soufre, et reformées lors du cycle de charge.

L'agent soufré est de préférence le soufre élémentaire S₈. Ce dernier confère en effet à la batterie lithium soufre une densité d'énergie plus importante, de par sa grande capacité massique de stockage.

L'agent générant une conductivité électronique peut représenter de 5 à 30% en masse environ, de préférence de 5 à 20% environ en masse, par rapport à la masse totale de l'électrode positive.

L'agent générant une conductivité électronique convenant pour la présente invention est de préférence choisi parmi le noir de carbone, le carbone SP, le noir d'acétylène, les fibres et nanofibres de carbone, les nanotubes de carbone, le graphène, le graphite, les particules et fibres métalliques et l'un de leurs mélanges.

L'agent générant une conductivité électronique est de préférence le noir de carbone.

Selon une forme de réalisation préférée de l'invention, l'agent générant une conductivité électronique est un agent carboné essentiellement mésoporeux présentant les caractéristiques suivantes :
- une surface spécifique S_{BET} supérieure ou égale à 800 m²/g environ, de préférence supérieure ou égale à 1000 m²/g environ, et encore plus préférentiellement supérieure ou égale à 1400 m²/g environ, ladite surface spécifique étant calculée par la méthode B.E.T (i.e. méthode de Brunauer, Emmett et Teller, 1938),
- une taille moyenne des mésopores comprise entre 4 et 10 nm environ, ladite taille étant calculée par la méthode B.J.H (i.e. méthode de Barrett, Joyner et Halenda, 1951), et
- un volume poreux total supérieur ou égal à 1,5 cm³/g environ, de préférence supérieur ou égal à 2 cm³/g environ, et encore plus préférentiellement supérieur ou égal à 2,5 cm³/g environ, ledit volume poreux total étant calculé par la méthode B.E.T.

Dans la présente invention, l'expression " agent carboné " signifie un agent comprenant essentiellement du carbone, c'est-à-dire comprenant au moins 80% en masse environ de carbone, de préférence au moins 90% en masse environ de carbone, et de préférence encore au moins 95% en masse environ de carbone.

Dans la présente invention, l'expression « agent carboné essentiellement mésoporeux » signifie que l'agent carboné comprend un volume mésoporeux représentant au moins 70% en volume environ du volume poreux total, de préférence au moins 80% en volume environ du volume poreux total, et de préférence encore au moins 90% en volume environ du volume poreux total, ledit volume mésoporeux étant calculé à partir de la méthode B.J.H.

Dans la description qui va suivre et sauf mention contraire explicite, toutes les valeurs de surface spécifique indiquées ont été calculées par la méthode B.E.T. De la même façon, toutes les valeurs de taille de mésopores indiquées ont été calculées par la méthode B.J.H. Enfin, toutes les valeurs de volume poreux total indiquées ont été déterminées par la méthode B.E.T et toutes les valeurs de volume mésoporeux ont été calculées par la méthode B.J.H.

De préférence, les particules d'agent carboné sont sous forme de particules sphériques (i.e. sous forme de billes) afin de favoriser la conduction notamment dans le sens perpendiculaire à l'électrode positive (i.e. dans le sens de son épaisseur) et ainsi de faciliter les échanges électrochimiques entre l'électrode positive et l'électrode négative. En effet, les particules d'agent carboné sous forme de particules sphériques ont une propension à former des réseaux conducteurs tridimensionnels. Lorsque les particules d'agent carboné sont sous forme de particules sphériques, cela signifie que plusieurs atomes de carbone forment des sphères.

Ainsi, afin de favoriser la conduction dans le sens transversal de l'électrode positive (i.e. dans le sens de son épaisseur), l'agent carboné n'est de préférence pas sous forme de fibres ou de plaquettes telles que des fibres de carbone ou des plaquettes de graphène, puisque celles-ci vont s'orienter préférentiellement dans le sens de fabrication du film.

Dans un mode de réalisation particulièrement préféré de l'invention, l'agent carboné comprend des particules de carbone sphériques ayant un diamètre moyen allant de 20 nm à 100 nm environ. Ainsi, chaque sphère comprenant plusieurs atomes de carbone présente un diamètre moyen allant de 20 nm à 100 nm environ.

Ledit agent carboné est de préférence le noir de carbone.

À titre d'exemple de noir de carbone essentiellement mésoporeux présentant les caractéristiques telles que définies dans la présente invention, on peut citer les noirs de carbone commercialisés sous les références : Ketjenblack 600JD®, Ketjenblack 700JD® et Timcal Ensaco 350G®.

Selon une forme de réalisation particulière, l'électrode positive comprend de 5 à 20% en masse environ de liant polymère P₁, et de préférence de 5 à 15% en masse environ de liant polymère P₁, par rapport à la masse totale de l'électrode positive.

Le liant polymère P₁ peut être choisi parmi les copolymères d'éthylène et de propylène, ou un mélange d'au moins deux de ces polymères ; les homopolymères et les copolymères d'oxyde d'éthylène (e.g. POE, copolymère du POE), d'oxyde de méthylène, d'oxyde de propylène, d'épichlorhydrine ou d'allylglycidyléther, ou leurs mélanges ; les polymères halogénés tels que les homopolymères et les copolymères de chlorure de vinyle, de fluorure de vinylidène (PVdF), de chlorure de vinylidène, de tétrafluorure d'éthylène, ou de chlorotrifluoroéthylène, les copolymères de fluorure de vinylidène et de hexafluoropropylène (PVdF-co-HFP) ou leurs mélanges ; les polyacrylates tels que le polyméthacrylate de méthyle ; les polyalcools tels que l'alcool polyvinylique (PVA), les polymères conducteurs électroniques tels que la polyaniline, le polypyrrole, les polyfluorènes, les polypyrènes, les polyazulènes, les polynaphtalènes, les polyacétylènes, le poly(p-phénylène-vinylène), les polycarbazoles, les polyindoles, les polyazépines, les polythiophènes, le polysulfure de p-phénylène ou leurs mélanges ; les polymères de type cationique tels que le polyéthylèneimine (PEI), la polyaniline sous forme de sel éméraldine (ES), le poly(N-vinylimidazole quaternisé), le Poly(acrylamide-co-chlorure de diallyldiméthyl ammonium) (AMAC) ou leurs mélanges ; et un de leurs mélanges.

Un polymère de type cationique (i.e. chargé positivement) permet d'améliorer la rétention des polysulfures qui sont chargés négativement dans l'électrode positive, et ainsi de limiter la diffusion des polysulfures dans l'électrolyte lors du cyclage.

Le liant polymère P₁ est de préférence le PVA, le PEI, l'AMAC ou un de leurs mélanges.

L'électrode positive peut comprendre en outre au moins un polyéther linéaire ou cyclique liquide de faible masse molaire tel que défini dans la présente invention.

L'électrode positive peut comprendre de 2 à 30% en masse environ de polyéther, et de préférence de 5 à 25% en masse environ de polyéther, par rapport à la masse totale de l'électrode positive.

L'électrode positive peut comprendre en outre au moins un sel de lithium L₂.

L'électrode positive peut comprendre de 2 à 25% en masse environ de sel de lithium L₂, de préférence de 3 à 15% en masse environ de sel de lithium L₂, et de préférence encore de 3 à 8% en masse environ de sel de lithium L₂, par rapport à la masse totale de l'électrode positive.

Le sel de lithium L₂ peut être choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄), le nitrate de lithium (LiNO₃), le lithium bis(fluorosulfonyl)imide (LiFSI), et leurs mélanges.

LiTFSI est le sel de lithium L₂ préféré.

L'électrode positive de l'invention peut présenter une porosité inférieure ou égale à 40% en volume environ, et de préférence inférieure ou égale à 30% en volume environ, par rapport au volume total de l'électrode. Cela permet ainsi d'améliorer la densité d'énergie de la batterie.

Il convient de noter que la masse totale de l'électrode positive comprend la masse de l'agent soufré, la masse du liant polymère P₁, la masse de l'agent carboné générant une conductivité électronique, éventuellement la masse du polyéther s'il est présent et éventuellement la masse du sel de lithium L₂ s'il est présent.

L'électrode positive peut être préparée :
a) en mélangeant au moins un agent soufré avec au moins un agent conférant une conductivité électronique, au moins un liant polymère P₁, éventuellement au moins un sel de lithium L₂, éventuellement au moins un polyéther linéaire ou cyclique liquide de faible masse molaire, et éventuellement au moins un solvant dudit liant polymère P₁, pour obtenir une pâte d'électrode,
b) en appliquant ladite pâte d'électrode sur au moins un support,
c) en séchant ladite pâte d'électrode pour obtenir une électrode positive sous forme de film supporté.

Le liant polymère P₁, le sel de lithium L₂ et le polyéther linéaire ou cyclique liquide de faible masse molaire sont tels que définis ci-dessus.

L'étape a) peut être réalisée par extrusion ou par broyage.

L'extrusion est très avantageuse puisqu'elle permet d'obtenir facilement des électrodes peu poreuses tout en utilisant peu de solvant. Elle permet également d'éviter une étape de calandrage sur l'électrode sèche qui peut engendrer des modifications de structure de l'électrode, nuire au bon enrobage des grains de l'agent carboné et ainsi peut induire un effondrement de l'électrode au cours du cyclage. Enfin, l'étape de calandrage présente l'inconvénient d'augmenter le nombre d'étapes pour obtenir l'électrode et ainsi son coût de production.

Le solvant du liant polymère P₁ de l'étape a) permet de solubiliser ledit liant polymère P₁.

Lorsqu'il est présent, ledit solvant représente de préférence moins de 30% en masse environ de la masse totale du mélange d'agent soufré, d'agent générant une conductivité électronique, de liant polymère P₁, éventuellement de sel de lithium L₁ et éventuellement de polyéther.

L'utilisation lors de la fabrication de l'électrode positive d'une faible quantité de solvant du liant polymère P₁ permet de conduire à une électrode positive de faible porosité (i.e. ≤ 40% en volume environ). Cette faible porosité permet de contrôler et d'optimiser la quantité de soufre présente dans l'électrode positive, et ainsi de parvenir à des densités volumiques d'énergie optimales.

Le solvant de l'étape a) peut être choisi parmi l'eau, la *N*-méthylpyrrolidone, les solvants de type carbonate tels que le carbonate d'éthylène, le carbonate de propylène, le carbonate de diméthyle, le carbonate de diéthyle ou le carbonate de méthyle et d'éthyle, l'acétone, les alcools tels que le méthanol, l'éthanol ou le propanol, et leurs mélanges.

Le solvant est de préférence choisi parmi l'eau, l'acétone, les alcools, et leurs mélanges.

L'étape b) peut être réalisée par laminage ou par enduction.

Le support peut être un collecteur de courant et/ou un film de support.

À titre d'exemple de collecteur de courant, on peut citer un collecteur de courant en aluminium recouvert d'une couche à base de carbone (couche anticorrosion).

À titre d'exemple de film de support, on peut citer un film plastique de type polyéthylène téréphtalate (PET) siliconé.

Le film supporté d'électrode positive obtenu à l'issue de l'étape c) peut avoir une épaisseur allant de 2 à 100 µm environ, et de préférence de 10 à 60 µm.

L'étape c) peut être réalisée à une température suffisante pour permettre d'éliminer le solvant de l'étape a).

Le soufre et les composés organiques comprenant du soufre présentent le désavantage d'être électriquement et ioniquement isolants (e.g. conductivité électronique du soufre S₈ = 5 x 10⁻³⁰ S.cm⁻¹ à 25°C). Par conséquent, afin de permettre une réaction électrochimique réversible à des régimes de courant élevés, le soufre doit donc être de préférence en contact intime avec un additif électriquement conducteur tel que le carbone.

Ainsi, lorsque l'agent conférant une conductivité électronique est un agent carboné essentiellement mésoporeux tel que défini dans la présente invention, ledit agent carboné essentiellement mésoporeux peut subir, en présence de l'agent soufré, un prétraitement pour former un matériau composite comprenant du soufre (S) et du carbone (C) afin de favoriser ledit contact intime.

Ledit prétraitement peut comprendre les étapes suivantes :
i) une étape de mélange d'un agent carboné essentiellement mésoporeux tel que défini dans la présente invention et d'un agent soufré tel que défini dans la présente invention, la quantité de soufre (S) dans ledit mélange allant de 75% à 85% en masse environ,
ii) une étape de broyage du mélange obtenu à l'étape précédente i),
iii) une étape de traitement thermique du mélange broyé obtenu à l'étape précédente ii) dans un récipient fermé, à une température suffisante pour faire fondre le soufre, et
iv) une étape de broyage du mélange traité thermiquement de l'étape précédente iii), afin d'obtenir un matériau composite comprenant du soufre (S) et du carbone (C).

Selon une forme de réalisation préférée, la quantité de soufre (S) dans le mélange de l'étape i) va de 80% à 85% en masse environ.

L'étape ii) de broyage permet de faciliter la répartition homogène du soufre sur le carbone. Elle peut être effectuée manuellement, notamment à l'aide d'un mortier, ou mécaniquement, notamment à l'aide d'un broyeur à billes.

La température suffisante de l'étape iii) est avantageusement choisie de telle sorte que le soufre soit à l'état liquide et que la viscosité du soufre fondu soit faible.

La température suffisante du traitement thermique de l'étape iii) peut aller de 115°C à 270°C environ, de préférence de 130°C à 220°C environ, et de préférence encore de 140°C à 170°C environ.

La durée du traitement thermique de l'étape iii) peut aller de 30 minutes à 24 heures environ, et de préférence de 1 à 5 heures environ.

L'étape iii) est de préférence effectuée sous atmosphère d'air sec, notamment présentant un point de rosée inférieur ou égal à -30°C environ.

Les inventeurs de la présente demande ont ainsi découvert que lorsque l'agent carboné présente une taille de mésopores particulière allant de 4 à 10 nm, le soufre est capable, lors de l'étape iii), de remplir la porosité de l'agent carboné. En effet, la taille des pores de l'agent carboné doit être suffisamment élevée (c'est-à-dire supérieure à 4 nm) pour permettre au soufre fondu de pénétrer à l'intérieur des pores, mais suffisamment faible (c'est-à-dire inférieure à 10 nm) pour exercer une rétention suffisante des polysulfures lors du cyclage.

De plus, la surface spécifique élevée (S_{BET} ≥ 700 m²/g) de l'agent carboné permet d'obtenir une fine couche de soufre sur tout le squelette formé par l'agent carboné et d'éviter la formation d'agglomérats de soufre dans le matériau composite de l'invention et de ce fait, la diffusion rapide du soufre lors du cyclage. Le volume poreux important est également nécessaire pour retenir efficacement les polysulfures formés au cours du cyclage.

Enfin, le matériau composite tel qu'obtenu à l'issue de l'étape iv) présente un revêtement fin de soufre réparti de façon homogène, permettant ainsi d'augmenter son accessibilité lors des réactions électrochimiques et sa stabilité mécanique.

L'étape iv) peut être effectuée manuellement, notamment à l'aide d'un mortier, ou mécaniquement, notamment à l'aide d'un broyeur à billes.

Ainsi, à l'issue de l'étape iv), le matériau composite comprenant du soufre et du carbone est structuré de telle sorte que le soufre forme un revêtement de surface de l'agent carboné en entrant dans les mésopores de celui-ci.

Le prétraitement peut comprendre en outre, entre l'étape iii) et l'étape iv), une étape de refroidissement du récipient fermé comprenant le mélange broyé.

Selon une forme de réalisation préférée, le prétraitement ne comprend pas d'autre(s) étape(s) de traitement thermique que l'étape iii).

Le prétraitement permettant de conduire au matériau composite est simple, rapide et ne nécessite pas de dispositif complexe. Grâce à ce prétraitement, l'enrobage de l'agent carboné par le soufre est facilité avec un faible coût de production.

Lorsque le mélange d'agent soufré et d'agent carboné essentiellement mésoporeux subit le prétraitement tel que défini dans la présente invention, l'étape a) de préparation de l'électrode positive consiste à mélanger ledit matériau composite comprenant du soufre (S) et du carbone (C) et tel que défini ci-dessus, avec au moins un liant polymère P₁, éventuellement au moins un sel de lithium L₁, éventuellement au moins un polyéther linéaire ou cyclique liquide de faible masse molaire, et éventuellement au moins un solvant dudit liant polymère P₁, pour obtenir une pâte d'électrode.

Dans un mode de réalisation particulier, l'électrode positive de l'invention ne comprend pas d'agent conférant une conductivité électronique autre que le noir de carbone essentiellement mésoporeux tel que défini dans la présente invention.

En effet, la présence du noir de carbone essentiellement mésoporeux peut suffire à conférer à l'électrode positive une conductivité électronique suffisante pour permettre un bon fonctionnement de la batterie.

L'invention a pour deuxième objet un procédé de fabrication d'une batterie lithium soufre telle que définie dans le premier objet de l'invention, caractérisé en ce qu'il comprend les étapes suivantes :
A) une étape de préparation d'un électrolyte liquide ou d'un électrolyte polymère gélifié tel que défini dans la présente invention, notamment par mélange d'au moins un polyéther linéaire ou cyclique liquide de faible masse molaire avec au moins un sel de lithium L₁,
B) une étape d'assemblage d'une électrode positive, d'une électrode négative et d'un séparateur tels que définis dans la présente invention,
ledit procédé comprenant en outre l'une ou l'autre des étapes suivantes :
C-1) une étape d'imprégnation de l'assemblage tel qu'obtenu à l'étape B) par l'électrolyte liquide préparé à l'étape A), ou
C-2) une étape d'imprégnation du séparateur par l'électrolyte polymère gélifié préparé à l'étape A), ladite imprégnation étant préalable à l'étape B) d'assemblage.

Le polyéther linéaire ou cyclique liquide de faible masse molaire, le sel de lithium L₁ et le liant polymère P₂ sont tels que définis dans le premier objet de l'invention.

L'électrolyte liquide de l'étape A) est de préférence préparé en dissolvant sous agitation au moins un sel de lithium L₁ dans un polyéther linéaire ou cyclique liquide de faible masse molaire, éventuellement à une température allant de 20 à 120°C environ.

L'électrolyte polymère gélifié de l'étape A) peut être obtenu par extrusion d'au moins un liant polymère P₂ avec une solution comprenant au moins un polyéther linéaire ou cyclique liquide de faible masse molaire et au moins un sel de lithium L₁ pour obtenir une pâte d'électrolyte, puis par laminage de la pâte d'électrolyte, notamment entre deux films de support pour obtenir un film d'électrolyte polymère gélifié.

L'extrusion peut être réalisée à une température allant de 60 à 170°C environ.

La concentration du sel de lithium L₁ dans ladite solution peut aller de 2 à 25 mol/l environ.

Les deux films de support peuvent être des films plastiques de PET siliconés.

L'imprégnation du séparateur par l'électrolyte polymère gélifié (cf. étape C-2)) peut être effectuée par co-laminage du séparateur et du film d'électrolyte polymère gélifié, notamment à une température de 80°C environ, et de préférence à une pression de 5 bars environ.

Les étapes A) et C-2) peuvent être une seule et même étape au cours de laquelle la pâte d'électrolyte obtenue par extrusion est laminée directement sur le séparateur pour obtenir un séparateur imprégné d'un électrolyte polymère gélifié.

La présente invention est illustrée par les exemples ci-après, auxquels elle n'est cependant pas limitée.

### EXEMPLES

Les matières premières utilisées dans les exemples sont listées ci-après :
- noir de carbone « Ketjenblack 600JD® », AkzoNobel,
- soufre S₈, de pureté 99,5%, Sigma Aldrich,
- copolymère du POE, « ZSN 8100 », Zeospan,
- copolymère de fluorure de vinylidène et de hexafluoropropylène (PVdF-co-HFP), « Solex », Solvay,
- LiTFSI, 3M,
- Film de PET siliconé, Mitsubishi,
- TEGDME de pureté 98%, Alfa Aesar,
- alcool polyvinylique (PVA) de masse molaire 72 000 g/mol, BioChemica,
- séparateur monocouche en polypropylène **S-A,** Celgard 2500,
- séparateur monocouche orienté biaxialement en polypropylène **S-1,** BPF220, Bolloré,
- séparateur bicouche orienté biaxialement en polypropylène **S-2,** Treopore PBS M63-NV509/09, Treofan,
- séparateur monocouche orienté biaxialement en polypropylène **S-3,** Treopore PDA M10-NV549/08, Treofan,
- séparateur monocouche orienté biaxialement en polypropylène **S-4,** Treopore PDA M4-NV549/09, Treofan.

Sauf indications contraires, tous les matériaux ont été utilisés tels que reçus des fabricants.

### EXEMPLE 1

### Préparation d'un matériau composite comprenant du soufre (S) et du carbone (C)

Un mélange carbone/soufre a été préparé en mélangeant un noir de carbone Ketjenblack avec du soufre S₈ dans les proportions massiques suivantes C/S : 18,8/81,2.

Le mélange C/S ainsi obtenu a ensuite été broyé au mortier puis entreposé dans un récipient fermé.

Ledit récipient contenant le mélange broyé de carbone et de soufre a été soumis à un traitement thermique à une température de 155°C pendant 1h30 sous air sec.

Le mélange traité thermiquement a ensuite été broyé au mortier pour obtenir le matériau composite **1.**

Le tableau 1 ci-dessous présente les caractéristiques [surface spécifique (en m²/g), volume poreux total (en cm³/g), volume poreux (en cm³/g), diamètre moyen des pores (en nm)] du noir de carbone utilisé pour préparer le matériau composite **1** :

**TABLEAU 1**

| | **Surface spécifique (m²/g)** | **Volume total (cm³/g)** | **Volume B.J.H (cm³/g) 2-50 nm** | **Diamètre moyen pores (B.E.T) (nm)** | **Diamètre moyen pores (B.J.H) (nm)** |
|---|---|---|---|---|---|
| **Noir de Carbone Ketjenblack** | 1529 (B.E.T) | 3,24 (< 126 nm)^{a} | 2,84 | 8,48 | 7,74 |

| | | | | | |
|---|---|---|---|---|---|
| (^{a}) : diamètre moyen des pores maximum pris en compte pour calculer le volume total. | | | | | |

La surface spécifique, le volume total poreux, le volume poreux B.J.H, le diamètre moyen des pores du noir de carbone Ketjenblack ont été évalués à l'aide d'un appareil vendu sous la dénomination commerciale ASAP2010, par la société Microméritics.

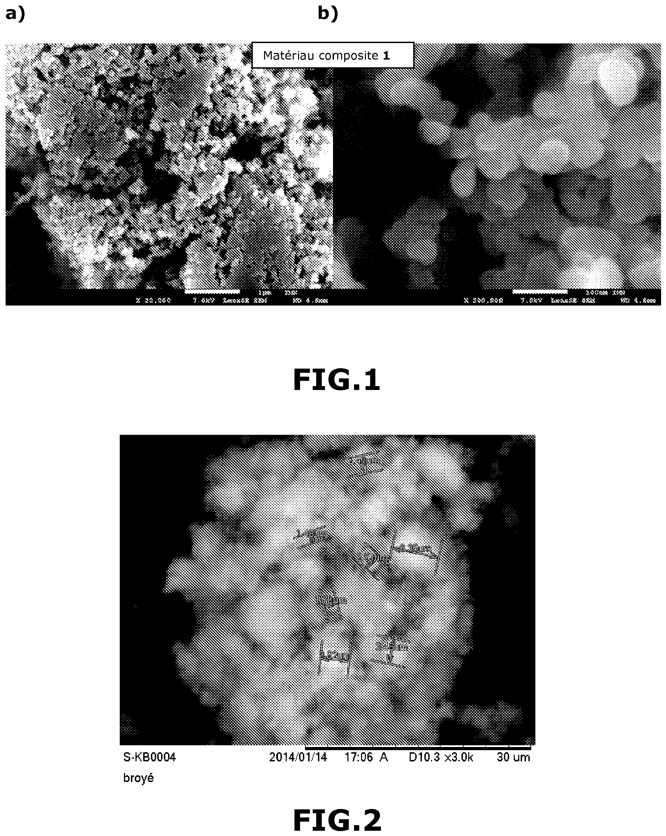

La figure 1 montre le matériau composite **1** par microscopie électronique à balayage (MEB). La figure 1b est un grossissement d'une partie de la figure la.

L'analyse par microscopie électronique à balayage (MEB) a été effectuée à l'aide d'un appareil vendu sous la dénomination commerciale JSM-7600F, par la société Jeol.

La figure 1 montre que le matériau composite **1** préparé à partir du noir de carbone Ketjenblack a la même structure que le noir de carbone de base. Une brillance indique la présence de soufre. Le soufre, après ce prétraitement, est réparti de façon homogène autour des grains de carbone et ne forme pas d'agglomérats à l'extérieur de ceux-ci.

À titre comparatif, la figure 2 montre un mélange de noir de carbone Ketjenblack et de soufre élémentaire (proportions massiques : 18,8% de noir de carbone Ketjenblack et 81,2% de soufre élémentaire) par MEB après l'étape ii) de broyage et avant l'étape iii) de traitement thermique. On observe que le soufre n'enrobe pas les grains de carbone et n'est pas dispersé de façon homogène dans l'agent carboné.

### EXEMPLE 2

### Préparation d'une électrode positive E-1 conforme à l'invention

Le matériau composite **1** obtenu dans l'exemple 1 a été mélangé à 80°C pendant 30 minutes avec du tétraéthylène glycol diméthyl éther (TEGDME), de l'alcool polyvinylique (PVA), un sel de lithium (LiTFSI) et de l'eau dans un mélangeur vendu sous la dénomination commerciale Plastograph® EC par la société Brabender®. La quantité d'eau utilisée représentait 20% en masse environ de la masse totale du matériau composite, du TEGDME, du PVA et du sel de lithium LiTFSI.

La pâte ainsi obtenue a ensuite été laminée à 95°C sur un collecteur de courant en aluminium recouvert d'une couche à base de carbone.

Le film ainsi obtenu a été séché à 80°C pendant 20 minutes dans une étuve pour obtenir une électrode positive **E-1** sous forme de film conforme à l'invention.

Le tableau 2 ci-dessous présente la composition massique de l'électrode positive **E-1** obtenue :

**TABLEAU 2**

| **Electrode positive** | **Noir de carbone (%)** | **Sel de lithium (%)** | **TEGDME (%)** | **PVA (%)** | **S (%)** |
|---|---|---|---|---|---|
| **E-1** | 12,5 | 5,3 | 20,3 | 8,0 | 53,9 |

### EXEMPLE 3

### Fabrication d'une batterie B-1 conforme à l'invention

Une batterie **B-1** a été préparée en assemblant sous atmosphère anhydre (air avec un point de rosée < -40°C) par laminage manuel à température ambiante :
- l'électrode positive **E-1** obtenue dans l'exemple 2,
- un séparateur **S-1 BPF220** (Bolloré) en polypropylène orienté biaxialement, et
- une électrode négative comprenant du lithium métal sous forme d'un film de lithium métal de 100µm d'épaisseur environ.

Le tableau 3 ci-dessous présente les caractéristiques du séparateur **S-1 :** l'épaisseur e (en µm), la porosité P (en %), la porosité de type Gurley P_{Gurley} (en s/100 cm³), le retrait thermique longitudinal mesuré à 100°C pendant 1 heure R_{L} (en %), le retrait thermique transversal mesuré à 100°C pendant 1 heure R_{T} (en %), la résistance maximale à la perforation Fₘₐₓ (en Newton N), et l'allongement à la rupture A (en mm).

La porosité de type Gurley P_{Gurley} est mesurée à l'aide d'un densimètre automatique vendu sous la dénomination commerciale Guenine Gurley Modèle 4340.

La porosité P est calculée en comparant l'épaisseur réelle du séparateur et son épaisseur théorique estimée à partir de sa masse et de la densité du polypropylène.

Les retraits thermiques longitudinal R_{L} et transversal R_{T} ont été estimés selon la norme ISO11501 (données obtenues auprès des fournisseurs de séparateurs).

La résistance à la perforation maximale Fₘₐₓ et l'allongement à la rupture A ont été obtenus à l'aide de tests de perforation ASTM D3420 réalisés à température ambiante à l'aide d'un dynamomètre vendu sous la dénomination commerciale Adamel-Lhomargy de type DY32.

**TABLEAU 3**

| **Séparateur** | **e (µm)** | **P (%)** | **P_{Gurley} (s/100 cm³)** | **R_{L} (%)** | **R_{T} (%)** | **Fₘₐₓ (N)** | **A (mm)** |
|---|---|---|---|---|---|---|---|
| **S-1** | 15 | >50 | 95 | 2 | 6,5 | 41 | 17 |

L'ensemble électrode positive/séparateur **S-1**/électrode négative a alors été imprégné par un électrolyte liquide constitué d'une solution à 1,5 mol/l de LiTFSI dans du TEGDME.

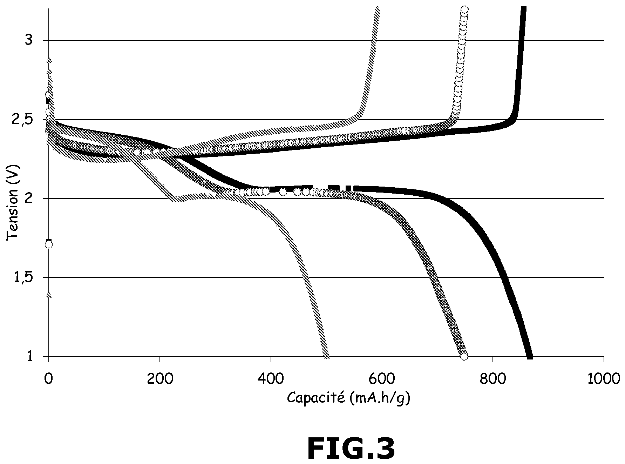

La tension (en volts, V) de la batterie **B-1** en fonction de sa capacité spécifique (en mAh/g) à un régime de courant de (C/20, D/20) et une température de 40°C est reportée sur la figure 3 pendant plusieurs cycles. Sur cette figure 3, la courbe avec les carrés pleins noirs représente le premier cycle, la courbe avec les ronds noirs vides représente le deuxième cycle, la courbe avec les triangles pleins gris représente le quatre-vingt-dixième cycle.

La figure 3 ne montre aucune apparition de dendrites même après 90 cycles dans la batterie **B-1** conforme à l'invention.

Ces résultats montrent que l'utilisation d'un séparateur en polypropylène orienté biaxialement dans une batterie lithium soufre permet d'éviter la formation de dendrites, tout en conservant une densité d'énergie volumique importante supérieure à 120 mAh/cm³ (en considérant le volume d'électrode positive, de séparateur et d'électrolyte).

### EXEMPLE 4 COMPARATIF

### Fabrication de batteries B-A et B-B non conformes à l'invention

Une batterie **B-A** a été préparée en assemblant sous atmosphère anhydre (air avec un point de rosée < -40°C) par laminage manuel à température ambiante :
- l'électrode positive **E-1** obtenue dans l'exemple 2,
- un séparateur **S-A** en polypropylène non orienté biaxialement, et
- une électrode négative comprenant du lithium métal sous forme d'un film de lithium métal de 100 µm d'épaisseur environ.

Le tableau 4 ci-dessous présente les caractéristiques du séparateur **S-A** : l'épaisseur e (en µm), la porosité P (en %), la porosité de type Gurley P_{Gurley} (en s/100 cm³), le retrait thermique longitudinal mesuré à 100°C pendant 1 heure R_{L} (en %), le retrait thermique transversal mesuré à 100°C pendant 1 heure R_{T} (en %), la résistance maximale à la perforation Fₘₐₓ (en Newton N), et l'allongement à la rupture A (en mm). Sauf indication(s) contraire(s), ces caractéristiques ont été obtenues comme décrit dans l'exemple 3 ci-dessus.

**TABLEAU 4**

| **Séparateur** | **e (µm)** | **P (%)** | **P_{Gurley} (s/100 cm³)** | **R_{L} (%)** | **R_{T} (%)** | **Fₘₐₓ (N)** | **A (mm)** |
|---|---|---|---|---|---|---|---|
| **S-A** | 25 | 55 | 180 | 5^{a} | 0^{a} | 63 | 30,1 |

| | | | | | | | |
|---|---|---|---|---|---|---|---|
| ^{a} : retraits thermiques mesurés à 90°C au lieu de 100°C. | | | | | | | |

L'ensemble électrode positive/séparateur **S-A**/électrode négative a alors été imprégné par un électrolyte liquide constitué d'une solution à 1,5 mol/l de LiTFSI dans du TEGDME.

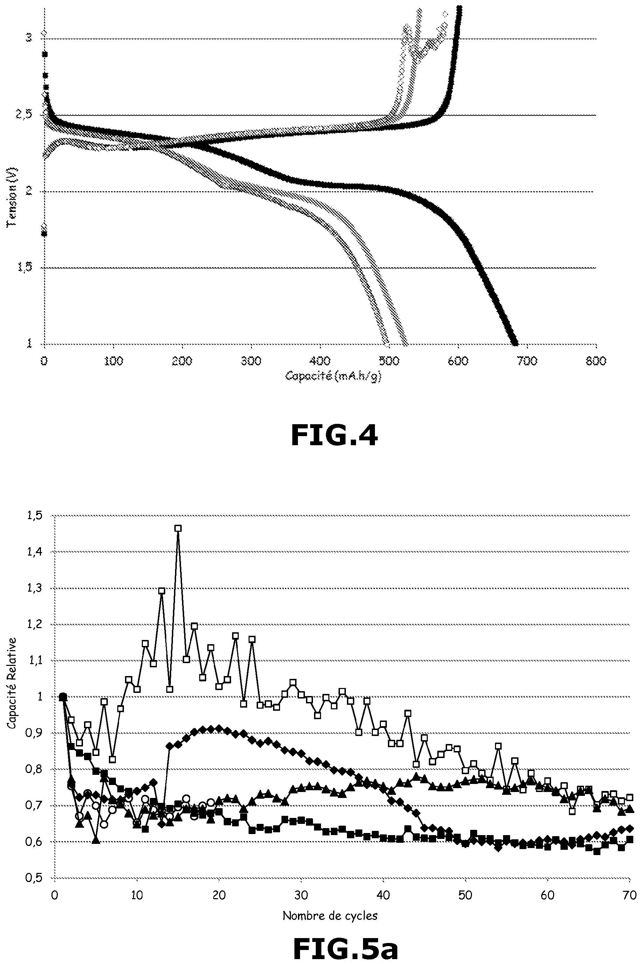

La tension (en volts, V) de la batterie **B-A** en fonction de sa capacité spécifique (en mAh/g) à un régime de courant de (C/20, D/20) et une température de 40°C est reportée sur la figure 4 pendant plusieurs cycles.

Sur cette figure 4, la courbe avec les carrés noirs pleins représente le premier cycle, la courbe avec les ronds gris pleins représente le deuxième cycle et la courbe avec les losanges vides représente le neuvième cycle.

La figure 4 montre la mort prématurée de la batterie **B-A** au moins au neuvième cycle induite par la formation de dendrites.

Ces résultats montrent que l'utilisation d'un séparateur en polypropylène qui n'est pas orienté biaxialement dans une batterie lithium soufre ne permet pas d'éviter la formation de dendrites et altère les performances électrochimiques de la batterie lithium soufre.

Une batterie **B-B** a été préparée en assemblant sous atmosphère anhydre (air avec un point de rosée < -40°C) par laminage à 5 bars et à 80°C :
- l'électrode positive **E-1** obtenue dans l'exemple 2,
- un séparateur **S-B** comprenant deux séparateurs **S-A** en polypropylène non orientés biaxialement et accolés par simple juxtaposition, et
- une électrode négative comprenant du lithium métal sous forme d'un film de lithium métal de 100 µm d'épaisseur environ.

L'ensemble électrode positive/séparateur **S-B**/électrode négative a alors été imprégné par un électrolyte liquide constitué d'une solution à 1,5 mol/l de LiTFSI dans du TEGDME.

L'utilisation de deux séparateurs non orientés biaxialement et accolés permet d'éviter la croissance prématurée des dendrites. Cependant, l'augmentation de l'épaisseur totale du séparateur (2 x 25 µm = 50 µm) engendre une diminution de la densité volumique d'énergie de 82 mAh/cm³ (lorsque le séparateur **S-A** est utilisé) à environ 50 mAh/cm³ (lorsque le séparateur **S-B** est utilisé) (en considérant le volume d'électrode positive, de séparateur et d'électrolyte).

### EXEMPLE 5

### Fabrication de batteries B-2, B-3, B-4 conformes à l'invention

Plusieurs batteries **B-2, B-3** et **B-4** ont été respectivement préparées en assemblant sous atmosphère anhydre (air avec un point de rosée < -40°C) par laminage manuel à température ambiante :
- l'électrode positive **E-1** obtenue dans l'exemple 2,
- chacun des séparateurs **S-2, S-3** et **S-4** en polypropylène orienté biaxialement, et
- une électrode négative comprenant du lithium métal sous forme d'un film de lithium métal de 100 µm d'épaisseur environ.

Le tableau 5 ci-dessous présente les caractéristiques respectives des séparateurs **S-2, S-3** et **S-4** : l'épaisseur e (en µm), la porosité P (en %), la porosité de type Gurley P_{Gurley} (en s/100 cm³), le retrait thermique longitudinal mesuré à 100°C pendant 1 heure R_{L} (en %), le retrait thermique transversal mesuré à 100°C pendant 1 heure R_{T} (en %), la résistance maximale à la perforation Fₘₐₓ (en Newton N), et l'allongement à la rupture A (en mm). Sauf indication(s) contraire(s), ces caractéristiques ont été obtenues comme décrit dans l'exemple 3 ci-dessus.

**TABLEAU 5**

| **Séparateur** | **e (µm)** | **P (%)** | **P_{Gurley} (s/100 cm³)** | **R_{L} (%)** | **R_{T} (%)** | **Fₘₐₓ (N)** | **A (mm)** |
|---|---|---|---|---|---|---|---|
| **S-2** | 38 | 60 | 310 | <3 | <3 | 40 | 12,9 |
| **S-3** | 35 | >60 | 77 | <3 | <3 | 40 | 13,9 |
| **S-4** | 25 | >60 | 370 | <5 | <10 | 42 | 14,6 |

Chacun des ensembles électrode positive/séparateur/électrode négative a alors été imprégné par un électrolyte liquide constitué d'une solution à 1,5 mol/l de LiTFSI dans du TEGDME.

La capacité relative, correspondant au rapport de la capacité de décharge du cycle n sur la capacité de décharge du premier cycle, des batteries **B-A** (courbe avec les ronds vides), **B-1** (courbe avec les carrés pleins), **B-2** (courbe avec les losanges pleins), **B-3** (courbe avec les carrés vides) et **B-4** (courbe avec les triangles pleins) en fonction du nombre de cycles à un régime de courant de (C/20, D/20) et une température de 40°C est reportée sur la figure 5a.

La figure 5a ne montre aucune apparition de dendrites même après 30 cycles dans les batteries conformes à l'invention **B-1, B-2, B-3** et **B-4,** quelle que soit l'épaisseur du séparateur orienté biaxialement utilisé. Toutefois, comme observé dans l'exemple comparatif 4 ci-dessus, la figure 5a montre la mort prématurée de la batterie **B-A** non conforme à l'invention, induite par la formation de dendrites.

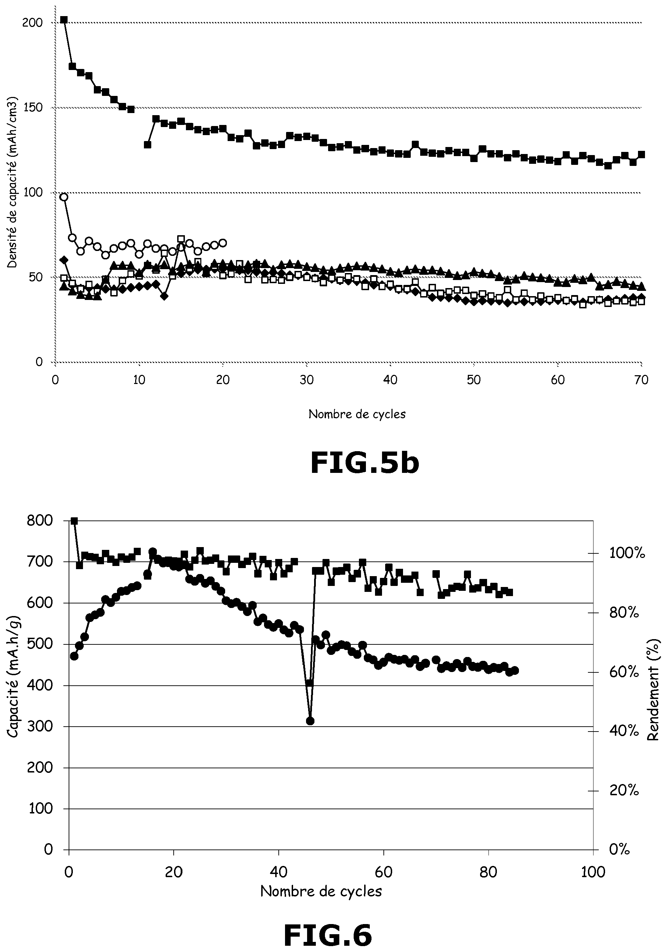

La densité d'énergie volumique (i.e. densité de capacité, en considérant le volume d'électrode positive, de séparateur et d'électrolyte) (en mAh/cm³) des batteries **B-A** (courbe avec les ronds vides), **B-1** (courbe avec les carrés pleins), **B-2** (courbe avec les losanges pleins), **B-3** (courbe avec les carrés vides) et **B-4** (courbe avec les triangles pleins) en fonction du nombre de cycles à un régime de courant de (C/20, D/20) et une température de 40°C est reportée sur la figure 5b.

Les résultats de la figure 5b montrent la bonne cyclabilité des batteries conformes à l'invention. La densité d'énergie volumique maximale (117 mAh/cm³) est obtenue avec le séparateur **S-1** (en considérant le volume d'électrode positive, de séparateur et d'électrolyte).

### EXEMPLE 6

### Fabrication d'une batterie B-5 conforme à l'invention

### a) Préparation d'un électrolyte polymère gélifié

Du sel de lithium (LiTFSI) (28,2% en masse) a été dissous dans du TEGDME (21,8% en masse) sous agitation magnétique à 50°C. Puis, au mélange obtenu, a été ajouté un copolymère du POE Zeospan® (50% en masse). Le mélange résultant a été malaxé dans le mélangeur Plastograph® EC tel que décrit dans l'exemple 2, à 80°C pendant 30 minutes. La pâte d'électrolyte obtenue a été laminée à 95°C entre deux films plastiques de PET siliconés.

### b) Montage de la batterie conforme à l'invention B-5

Une batterie **B-5** a été préparée en assemblant sous atmosphère anhydre (air avec un point de rosée < -40°C) par laminage à 5 bars et à 80°C :
- l'électrode positive **E-1** obtenue dans l'exemple 2,
- un séparateur **S-1** BPF220 (Bolloré) en polypropylène orienté biaxialement préalablement imprégné de l'électrolyte polymère gélifié tel qu'obtenu ci-dessus à l'étape a), et
- une électrode négative comprenant du lithium métal sous forme d'un film de lithium métal de 100 µm d'épaisseur environ.

Le séparateur **S-1** en polypropylène orienté biaxialement a été préalablement imprégné par l'électrolyte polymère gélifié par co-laminage du séparateur et de l'électrolyte polymère gélifié à 80°C et à une pression de 5 bars sous atmosphère d'air sec (i.e. air avec un point de rosée < -40°C).

La capacité spécifique (en mAh/g) pendant la décharge en fonction du nombre de cycles (courbe avec les ronds pleins), ainsi que le rendement coulombique (en %), correspondant au rapport de la capacité de décharge du cycle n sur la capacité de charge du cycle n, en fonction du nombre de cycles (courbe avec les carrés pleins) de la batterie **B-5** à un régime de courant de D/20 et une température de 40°C, sont reportées sur la figure 6.

La figure 6 ne montre aucune apparition de dendrites même après 85 cycles dans la batterie conforme à l'invention **B-5.**

La densité volumique d'énergie obtenue est de 83 mAh/cm³ (en considérant le volume d'électrode positive, de séparateur et d'électrolyte).

### EXEMPLE COMPARATIF 7

### Fabrication d'une batterie B-C non conforme à l'invention

### a) Préparation d'un électrolyte polymère gélifié

Du sel de lithium (LiTFSI) (17,7% en masse) a été dissous dans du TEGDME (27,3% en masse) sous agitation magnétique à 50°C. Puis, au mélange obtenu, a été ajouté un copolymère du POE Zeospan® (15% en masse) et un copolymère de fluorure de vinylidène et de hexafluoropropylène (PVdF-co-HFP) (30% en masse). Le mélange résultant a été malaxé dans le mélangeur Plastograph® EC tel que décrit dans l'exemple 2, à 130°C pendant 30 minutes. La pâte d'électrolyte obtenue a été laminée à 125°C entre deux films plastiques de PET siliconés.

### b) Montage de la batterie non-conforme à l'invention B-C

Une batterie **B-C** a été préparée en assemblant sous atmosphère anhydre (air avec un point de rosée < -40°C) par laminage à 5 bars et à 80°C :
- l'électrode positive **E-1** obtenue dans l'exemple 2,
- un électrolyte polymère gélifié tel qu'obtenu ci-dessus à l'étape a), et
- une électrode négative comprenant du lithium métal sous forme d'un film de lithium métal de 100 µm d'épaisseur environ.

Dans cet exemple, la batterie n'est pas conforme à l'invention car elle ne comprend pas de séparateur poreux orienté biaxialement comprenant au moins du polypropylène. La présence du PVdF-co-HFP dans l'électrolyte polymère gélifié préparé à l'étape a) permet d'assurer sa tenue mécanique afin qu'il puisse être utilisé comme séparateur.

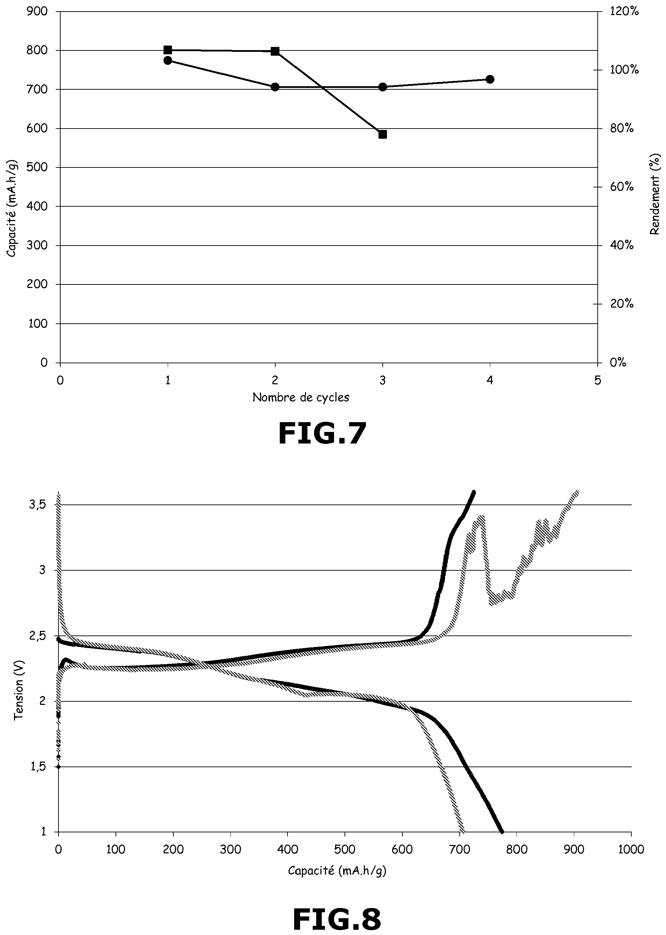

La capacité spécifique (en mAh/g) pendant la décharge en fonction du nombre de cycles (courbe avec les ronds pleins), ainsi que le rendement coulombique (en %), correspondant au rapport de la capacité de décharge du cycle n sur la capacité de charge du cycle n, en fonction du nombre de cycles (courbe avec les carrés pleins) de la batterie **B-C** à un régime de courant de D/40 et une température de 40°C, sont reportées sur la figure 7.

L'évolution de la tension (en volts, V) de la batterie **B-C** en fonction de sa capacité spécifique (en mAh/g) à un régime de courant de (C/40) et une température de 40°C, est reportée sur la figure 8 pendant plusieurs cycles. Sur cette figure 8, la courbe noire représente le premier cycle et la courbe grise représente le troisième cycle.

La figure 8 montre l'apparition de dendrites dès le troisième cycle dans la batterie non-conforme à l'invention **B-C,** résultant en une cyclabilité altérée visible sur la figure 7. Cette croissance dendritique prématurée peut être attribuée à la dégradation du PVdF-co-HFP par les polysulfures formés lors du cyclage, résultant en une détérioration des propriétés mécaniques de l'électrolyte polymère gélifié qui ne joue plus alors correctement son rôle anti-dendrite.

La densité volumique d'énergie obtenue est de 95 mAh/cm³ (en considérant le volume d'électrode positive, de séparateur et d'électrolyte).

## Revendications

1. Batterie lithium soufre comprenant :
- une électrode négative comprenant du lithium métal ou un alliage de lithium métal,
- une électrode positive comprenant au moins un agent soufré choisi parmi le soufre élémentaire S₈ et un composé organique soufré comprenant au moins une liaison S-S, au moins un liant polymère P₁ et au moins un agent générant une conductivité électronique,
- un électrolyte comprenant au moins un polyéther linéaire ou cyclique liquide de faible masse molaire et au moins un sel de lithium L₁, et
- un séparateur poreux,
ladite batterie lithium soufre étant **caractérisée en ce que** le séparateur poreux est un séparateur orienté biaxialement comprenant au moins du polypropylène et ladite électrode positive comprend au moins 40% en masse environ de soufre (S) par rapport à la masse totale de ladite électrode positive.

2. Batterie selon la revendication 1, **caractérisée en ce que** le séparateur présente une épaisseur allant de 5 µm à 50 µm.

3. Batterie selon la revendication 1 ou la revendication 2, **caractérisée en ce que** le séparateur présente une porosité supérieure ou égale à 50% en volume.

4. Batterie selon l'une quelconque des revendications précédentes, **caractérisée en ce que** le séparateur présente des pores de taille moyenne allant de 50 nm à 3 µm.

5. Batterie selon l'une quelconque des revendications précédentes, **caractérisée en ce que** le séparateur présente une porosité de type Gurley allant de 50 à 500 s/100 cm³.

6. Batterie selon l'une quelconque des revendications précédentes, **caractérisée en ce que** le séparateur présente un retrait thermique dans le sens longitudinal et/ou un retrait thermique dans le sens transversal strictement inférieur à 15%.

7. Batterie selon l'une quelconque des revendications précédentes, **caractérisée en ce que** le polyéther est choisi parmi :
* les polyéthylènes glycols de formule H-[O-CH₂-CH₂]ₘ-OH dans laquelle m est compris entre 1 et 13,
* les éthers de glycol de formule R-[O-CH₂-CH₂]ₚ-O-R' dans laquelle p est compris entre 1 et 13 et R et R', identiques ou différents, sont des groupes alkyles linéaires, ramifiés ou cycliques, pouvant comprendre de 1 à 20 atomes de carbone,
* les éthers de formule R¹-[CH₂-O]_{q}-R^{1'} dans laquelle q est compris entre 1 et 13, R¹ et R^{1'}, identiques ou différents, sont des alkyles linéaires, ramifiés ou cycliques, pouvant comprendre de 1 à 20 atomes de carbone et éventuellement des hétéroatomes,
* les éthers cycliques pouvant comprendre de 2 à 20 atomes de carbone, les polyéthers cycliques pouvant comprendre de 3 à 40 atomes de carbone, et
* un de leurs mélanges.

8. Batterie selon l'une quelconque des revendications précédentes, **caractérisée en ce que** le sel de lithium L₁ est choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄), le nitrate de lithium (LiNO₃), le lithium bis(fluorosulfonyl)imide (LiFSI) et leurs mélanges.

9. Batterie selon l'une quelconque des revendications précédentes, **caractérisée en ce que** l'électrolyte est un électrolyte liquide et la concentration du sel de lithium L₁ dans l'électrolyte liquide va de 0,8 à 8 mol/l.

10. Batterie selon l'une quelconque des revendications précédentes, **caractérisée en ce que** l'électrolyte est un électrolyte polymère gélifié et il comprend en outre au moins un liant polymère P₂.

11. Batterie selon la revendication 10, **caractérisée en ce que** l'électrolyte comprend de 20 à 70% en masse de liant polymère P₂.

12. Batterie selon la revendication 10 ou la revendication 11, **caractérisée en ce que** l'électrolyte comprend de 15 à 45% en masse de sel de lithium L₁.

13. Batterie selon l'une quelconque des revendications 10 à 12, **caractérisée en ce que** l'électrolyte comprend de 5 à 40% en masse de polyéther.

14. Batterie selon l'une quelconque des revendications précédentes, **caractérisée en ce que** l'agent générant une conductivité électronique est un agent carboné essentiellement mésoporeux présentant les caractéristiques suivantes :
- une surface spécifique S_{BET} supérieure ou égale à 800 m²/g, ladite surface spécifique étant calculée par la méthode B.E.T,
- une taille moyenne des mésopores comprise entre 4 et 10 nm, ladite taille étant calculée par la méthode B.J.H, et
- un volume poreux total supérieur ou égal à 1,5 cm³/g, ledit volume poreux total étant calculé par la méthode B.E.T.

15. Batterie selon la revendication 14, **caractérisée en ce que** ledit agent carboné essentiellement mésoporeux subit en présence de l'agent soufré un prétraitement pour former un matériau composite comprenant du soufre (S) et du carbone (C), ledit prétraitement comprenant les étapes suivantes :
i) une étape de mélange d'un agent carboné essentiellement mésoporeux tel que défini dans la revendication 14 et d'un agent soufré tel que défini dans la revendication 1, la quantité de soufre (S) dans ledit mélange allant de 75% à 85% en masse,
ii) une étape de broyage du mélange obtenu à l'étape précédente i),
iii) une étape de traitement thermique du mélange broyé obtenu à l'étape précédente ii) dans un récipient fermé, à une température suffisante pour faire fondre le soufre, et
iv) une étape de broyage du mélange traité thermiquement de l'étape précédente iii) afin d'obtenir un matériau composite comprenant du soufre (S) et du carbone (C).

16. Batterie selon la revendication 14 ou la revendication 15, **caractérisée en ce que** l'agent carboné est le noir de carbone.

17. Procédé de fabrication d'une batterie telle que définie à l'une quelconque des revendications 1 à 16, **caractérisé en ce qu'**il comprend les étapes suivantes :
A) une étape de préparation d'un électrolyte liquide ou polymère gélifié tel que défini à l'une quelconque des revendications 9 à 13,
B) une étape d'assemblage d'une électrode positive, d'une électrode négative et d'un séparateur tels que définis à l'une quelconque des revendications 1 à 16,
ledit procédé comprenant en outre l'une ou l'autre des étapes suivantes :
C-1) une étape d'imprégnation de l'assemblage tel qu'obtenu à l'étape B) par l'électrolyte liquide préparé à l'étape A), ou
C-2) une étape d'imprégnation du séparateur par l'électrolyte polymère gélifié préparé à l'étape A), ladite imprégnation étant préalable à l'étape B) d'assemblage.

## Patentansprüche

1. Lithium-Schwefel-Batterie, umfassend:
- eine negative Elektrode, umfassend Lithiummetall oder eine Lithiummetalllegierung,
- eine positive Elektrode, umfassend mindestens ein schwefelhaltiges Mittel, ausgewählt aus dem elementaren Schwefel S₈ und einer schwefelhaltigen organischen Verbindung, umfassend mindestens eine S-S-Bindung, mindestens ein Polymerbindemittel P₁ und mindestens ein Mittel, das eine elektronische Leitfähigkeit erzeugt,
- einen Elektrolyten, umfassend mindestens einen flüssigen linearen oder cyclischen Polyether geringer molarer Masse und mindestens ein Lithiumsalz L₁, und
- einen porösen Separator,
wobei die Lithium-Schwefel-Batterie **dadurch gekennzeichnet ist, dass** der poröse Separator ein biaxial ausgerichteter Separator ist, umfassend mindestens Polypropylen, und die positive Elektrode mindestens zirka 40 Ma% Schwefel (S) in Bezug zur Gesamtmasse der positiven Elektrode umfasst.

2. Batterie nach Anspruch 1, **dadurch gekennzeichnet, dass** der Separator eine Stärke von 5 µm bis 50 µm aufweist.

3. Batterie nach Anspruch 1 oder Anspruch 2, **dadurch gekennzeichnet, dass** der Separator eine Porosität größer oder gleich 50 Vol% aufweist.

4. Batterie nach einem der vorangehenden Ansprüche, **dadurch gekennzeichnet, dass** der Separator Poren mit einer durchschnittlichen Größe von 50 nm bis 3 µm aufweist.

5. Batterie nach einem der vorangehenden Ansprüche, **dadurch gekennzeichnet, dass** der Separator eine Porosität vom Typ Gurley von 50 bis 500 s/100 cm³ aufweist

6. Batterie nach einem der vorangehenden Ansprüche, **dadurch gekennzeichnet, dass** der Separator einen Wärmeschwund in Längsrichtung und/oder einen Wärmeschwund in Querrichtung kleiner als 15 % aufweist.

7. Batterie nach einem der vorangehenden Ansprüche, **dadurch gekennzeichnet, dass** der Polyether ausgewählt ist aus:
* den Polyethylenglykolen der Formel H-[O-CH₂-CH₂]ₘ-OH, wobei m zwischen 1 und 13 inklusive ist,
* den Glykolethern der Formel R-[O-CH₂-CH₂]ₚ-O-R', wobei p zwischen 1 und 13 inklusive ist und R und R', identisch oder unterschiedlich, lineare, verzweigte oder cyclische Alkylgruppen sind, die 1 bis 20 Kohlenstoffatome umfassen können,
* den Ethern der Formel R¹-[CH₂-O]_{q}-R^{1'}, wobei q zwischen 1 und 13 inklusive ist, R¹ und R^{1'}, identisch oder unterschiedlich, lineare, verzweigte oder cyclische Alkyle sind, die 1 bis 20 Kohlenstoffatome und eventuell Heteroatome umfassen können,
*den cyclischen Ethern, die 2 bis 20 Kohlenstoffatome umfassen können, den cyclischen Polyethern, die 3 bis 40 Kohlenstoffatome umfassen können, und
* einem ihrer Gemische.

8. Batterie nach einem der vorangehenden Ansprüche, **dadurch gekennzeichnet, dass** das Lithiumsalz L₁ aus dem Lithiumfluorat (LiFO₃), dem Lithium-Bis(Trifluormethansulfonyl)imid (LiTFSI), dem Lithiumhexafluorphosphat (LiPF₆), dem Lithiumfluorborat (LiBF₄), dem Lithiummetaborat (LiBO₂), dem Lithiumperchlorat (LiClO₄), dem Lithiumnitrat (LiNO₃), dem Lithium-Bis(fluorsulfonyl)imid (LiFSI) und ihren Gemischen ausgewählt ist.

9. Batterie nach einem der vorangehenden Ansprüche, **dadurch gekennzeichnet, dass** der Elektrolyt ein flüssiger Elektrolyt ist und die Konzentration des Lithiumsalzes L₁ in dem flüssigen Elektrolyten 0,8 bis 8 mol/l beträgt.

10. Batterie nach einem der vorangehenden Ansprüche, **dadurch gekennzeichnet, dass** der Elektrolyt ein gelartiger Polymerelektrolyt ist und er ferner mindestens ein Polymerbindemittel P₂ umfasst.

11. Batterie nach Anspruch 10, **dadurch gekennzeichnet, dass** der Elektrolyt 20 bis 70 Ma% Polymerbindemittel P₂ umfasst.

12. Batterie nach Anspruch 10 oder Anspruch 11, **dadurch gekennzeichnet, dass** der Elektrolyt 15 bis 45 Ma% Lithiumsalz L₁ umfasst.

13. Batterie nach einem der Ansprüche 10 bis 12, **dadurch gekennzeichnet, dass** der Elektrolyt 5 bis 40 Ma% Polyether umfasst.

14. Batterie nach einem der vorangehenden Ansprüche, **dadurch gekennzeichnet, dass** das eine elektronische Leitfähigkeit erzeugende Mittel ein im Wesentlichen mesoporöses kohlenstoffhaltiges Mittel ist, das die folgenden Merkmale aufweist:
- eine spezifische Oberfläche S_{BET} größer oder gleich 800 m²/g, wobei die spezifische Oberfläche mit der B.E.T.-Methode berechnet wird,
- eine mittlere Größe der Mesoporen zwischen 4 und 10 nm inklusive, wobei die Größe mit der B.J.H.-Methode berechnet wird, und
- ein Porenvolumen insgesamt größer oder gleich 1,5 cm³/g, wobei das Porenvolumen insgesamt mit der B.E.T.-Methode berechnet wird.

15. Batterie nach Anspruch 14, **dadurch gekennzeichnet, dass** das im Wesentlichen mesoporöse kohlenstoffhaltige Mittel in Gegenwart des schwefelhaltigen Mittels einer Vorbehandlung unterzogen wird, um ein Verbundmaterial zu bilden, das Schwefel (S) und Kohlenstoff (C) umfasst, wobei die Vorbehandlung die folgenden Schritte umfasst:
i) einen Mischschritt eines kohlenstoffhaltigen, im Wesentlichen mesoporösen Mittels nach Anspruch 14 und eines schwefelhaltigen Mittels nach Anspruch 1, wobei die Schwefelmenge (S) in dem Gemisch 75 bis 85 Ma% beträgt,
ii) einen Zerkleinerungsschritt des in vorangehendem Schritt i) erhaltenen Gemischs,
iii) einen thermischen Behandlungsschritt des in vorangehendem Schritt ii) erhaltenen zerkleinerten Gemischs in einem verschlossenen Behälter bei einer Temperatur, die ausreichend ist, dass der Schwefel schmilzt, und
iv) einen Zerkleinerungsschritt des thermisch behandelten Gemischs des vorangehenden Schritts iii), um ein Verbundmaterial zu erhalten, das Schwefel (S) und Kohlenstoff (C) umfasst.

16. Batterie nach Anspruch 14 oder Anspruch 15, **dadurch gekennzeichnet, dass** das kohlenstoffhaltige Mittel Karbonschwarz ist.

17. Herstellungsverfahren einer Batterie nach einem der Ansprüche 1 bis 16, **dadurch gekennzeichnet, dass** es die folgenden Schritte umfasst:
A) einen Zubereitungsschritt eines flüssigen Elektrolyten oder gelartigen Polymers nach einem der Ansprüche 9 bis 13,
B) einen Zusammenbauschritt einer positiven Elektrode, einer negativen Elektrode und eines Separators nach einem der Ansprüche 1 bis 16,
wobei das Verfahren ferner den einen oder den anderen der folgenden Schritte umfasst:
C-1) einen Imprägnierschritt des Zusammenbaus, wie in Schritt B) erhalten, mit dem flüssigen Elektrolyten, zubereitet in Schritt A), oder
C-2) einen Imprägnierschritt des Separators durch den in Schritt A) zubereiteten gelartigen Polymerelektrolyten, wobei die Imprägnierung vor dem Zusammenbauschritt B) erfolgt.

## Claims

1. Lithium-sulphur battery comprising:
- a negative electrode comprising lithium metal or an alloy of lithium metal,
- a positive electrode comprising at least one sulphur-comprising agent chosen from elemental sulphur S₈ and an organic sulphur-comprising compound having at least one S-S bond, at least one polymer binder P₁ and at least one agent generating an electron conductivity,
- an electrolyte comprising at least one liquid linear or cyclic polyether of low molar mass and at least one lithium salt L₁, and
- a porous separator,
said lithium-sulphur battery being **characterized in that** the porous separator is a biaxially oriented separator comprising at least polypropylene and said positive electrode comprises at least 40% by weight approximately of sulphur (S) with respect to the total weight of said positive electrode.

2. Battery according to Claim 1, **characterized in that** the separator exhibits a thickness ranging from 5 µm to 50 µm.

3. Battery according to Claim 1 or Claim 2, **characterized in that** the separator exhibits a porosity of greater than or equal to 50% by volume.

4. Battery according to any one of the preceding claims, **characterized in that** the separator exhibits pores with a mean size ranging from 50 nm to 3 µm.

5. Battery according to any one of the preceding claims, **characterized in that** the separator exhibits a porosity of Gurley type ranging from 50 to 500 s/100 cm³.

6. Battery according to any one of the preceding claims, **characterized in that** the separator exhibits a heat shrinkage in the longitudinal direction and/or a heat shrinkage in the transverse direction strictly of less than 15%.

7. Battery according to any one of the preceding claims, **characterized in that** the polyether is chosen from:
* polyethylene glycols of formula H-[O-CH₂-CH₂]ₘ-OH in which m is between 1 and 13,
* glycol ethers of formula R-[O-CH₂-CH₂]ₚ-O-R' in which p is between 1 and 13 and R and R', which are identical or different, are linear, branched or cyclic alkyl groups which can comprise from 1 to 20 carbon atoms,
* ethers of formula R¹-[CH₂-O]_{q}-R^{1'} in which q is between 1 and 13 and R¹ and R^{1'}, which are identical or different, are linear, branched or cyclic alkyls which can comprise from 1 to 20 carbon atoms and optionally heteroatoms,
* cyclic ethers which can comprise from 2 to 20 carbon atoms or cyclic polyethers which can comprise from 3 to 40 carbon atoms, and
* one of their mixtures.

8. Battery according to any one of the preceding claims, **characterized in that** the lithium salt L₁ is chosen from lithium fluorate (LiFO₃), lithium bis(trifluoromethanesulphonyl)imide (LiTFSI), lithium hexafluorophosphate (LiPF₆), lithium fluoroborate (LiBF₄), lithium metaborate (LiBO₂), lithium perchlorate (LiClO₄), lithium nitrate (LiNO₃), lithium bis(fluorosulphonyl)imide (LiFSI) and their mixtures.

9. Battery according to any one of the preceding claims, **characterized in that** the electrolyte is a liquid electrolyte and the concentration of the lithium salt L₁ in the liquid electrolyte ranges from 0.8 to 8 mol/l.

10. Battery according to any one of the preceding claims, **characterized in that** the electrolyte is a gelled polymer electrolyte and it additionally comprises at least one polymer binder P₂.

11. Battery according to Claim 10, **characterized in that** the electrolyte comprises from 20 to 70% by weight of polymer binder P₂.

12. Battery according to Claim 10 or Claim 11, **characterized in that** the electrolyte comprises from 15 to 45% by weight of lithium salt L₁.

13. Battery according to any one of Claims 10 to 12, **characterized in that** the electrolyte comprises from 5 to 40% by weight of polyether.

14. Battery according to any one of the preceding claims, **characterized in that** the agent generating an electron conductivity is an essentially mesoporous carbon-comprising agent exhibiting the following characteristics:
- an S_{BET} specific surface of greater than or equal to 800 m²/g, said specific surface being calculated by the BET method,
- a mean size of the mesopores of between 4 and 10 nm, said size being calculated by the BJH method, and
- a total pore volume of greater than or equal to 1.5 cm³/g, said total pore volume being calculated by the BET method.

15. Battery according to Claim 14, **characterized in that** said essentially mesoporous carbon-comprising agent is subjected, in the presence of the sulphur-comprising agent, to a pretreatment in order to form a composite material comprising sulphur (S) and carbon (C), said pretreatment comprising the following stages:
i) a stage of mixing an essentially mesoporous carbon-comprising agent as defined in Claim 14 and a sulphur-comprising agent as defined in Claim 1, the amount of sulphur (S) in said mixture ranging from 75% to 85% by weight,
ii) a stage of grinding the mixture obtained in the preceding stage i),
iii) a stage of heat treatment of the ground mixture obtained in the preceding stage ii) in a closed container, at a temperature sufficient to cause the sulphur to melt, and
iv) a stage of grinding the heat-treated mixture of the preceding stage iii) in order to obtain a composite material comprising sulphur (S) and carbon (C).

16. Battery according to Claim 14 or Claim 15, **characterized in that** the carbon-comprising agent is carbon black.

17. Process for the manufacture of a battery as defined in any one of Claims 1 to 16, **characterized in that** it comprises the following stages:
A) a stage of preparation of a liquid or gelled polymer electrolyte as defined in any one of Claims 9 to 13,
B) a stage of assembling a positive electrode, a negative electrode and a separator as are defined in any one of Claims 1 to 16,
said process initially comprising one or other of the following stages:
C-1) a stage of impregnation of the assembly as obtained in stage B) by the liquid electrolyte prepared in stage A), or
C-2) a stage of impregnation of the separator by the gelled polymer electrolyte prepared in stage A), said impregnation being prior to the assembling stage B).
